# EUROPEAN PATENT SPECIFICATION

(11) **EP 1 342 413 B1**
(45) Date of publication and mention of the grant of the patent: **24.08.2005**
(21) Application number: 02447035.3
(22) Date of filing: 08.03.2002
(51) Int. Cl.: A01N 59/20

(54) **Plant protection formulation containing a copper-polyamine chelate**
Pflanzenschutzmittelformulierung enthaltend ein Kupfer-Polyamin Chelat
Formulation d'un produit phytosanitaire contenant un chélate cuivre-polyamine

(43) Date of publication of application: 10.09.2003
(73) Proprietor: BMS Micro-Nutrients N.V., 2880 Bornem (BE)
(72) Inventor: Camerlynck, Rudiger, 9840 De Pinte (BE); De Potter, Pierre, 1090 Brussel (BE)
(74) Representative: Luys, Marie-José A.H.

(56) References cited:
- DE-A- 3 632 116
- FR-A- 1 130 117
- FR-A- 1 301 904
- GB-A- 1 491 137
- US-A- 2 924 551
- US-A- 2 977 279
- US-A- 4 048 324
- DATABASE CA [Online] CHEMICAL ABSTRACTS SERVICE, COLUMBUS, OHIO, US; DIONIGI, CHRISTOPHER P. ET AL: "Copper -containing aquatic herbicides increase geosmin biosynthesis by Streptomyces tendae and Penicillium expansum" retrieved from STN Database accession no. 123:3308 XP002203482 & WEED SCI. (1995), 43(2), 196-200 ,
- DATABASE CA [Online] CHEMICAL ABSTRACTS SERVICE, COLUMBUS, OHIO, US; MIKHEEV, S. V. ET AL: "Thermodynamics of the chelate effect in the formation of copper(II) ethylenediamine complexes in water-organic solvents" retrieved from STN Database accession no. 132:213355 XP002202558 & RUSSIAN JOURNAL OF COORDINATION CHEMISTRY (TRANSLATION OF KOORDINATSIONNAYA KHIMIYA) (2000), 26(2), 143-145 ,
- DATABASE CA [Online] CHEMICAL ABSTRACTS SERVICE, COLUMBUS, OHIO, US; KIRSCHENBAUM, LOUIS J. ET AL: "Kinetics of copper(II)-ethylenediamine complex formation" retrieved from STN Database accession no. 72:83368 XP002202559 & J. CHEM. SOC. A (1970), (4), 684-8 ,
- DATABASE CA [Online] CHEMICAL ABSTRACTS SERVICE, COLUMBUS, OHIO, US; SIDDIQUI, SHIRIN ET AL: "Proton-promoted chelate ring opening in copper(II) polyamine complexes" retrieved from STN Database accession no. 99:219424 XP002202560 & INORG. CHEM. (1983), 22(25), 3726-33 ,
- DATABASE CA [Online] CHEMICAL ABSTRACTS SERVICE, COLUMBUS, OHIO, US; IWASAKI, KOZO: "Copper uptake from the solution of amine-copper chelates by cucumber plants" retrieved from STN Database accession no. 120:53775 XP002202561 & KOCHI DAIGAKU GAKUJUTSU KENKYU HOKOKU, NOGAKU (1992), 41, 59-66 ,
- DATABASE WPI Section Ch, Week 199235 Derwent Publications Ltd., London, GB; Class A97, AN 1992-288860 XP002202562 & JP 04 198103 A (INOUE SEKAI KOGYO KK), 17 July 1992 (1992-07-17)

## Description

The present invention relates to a plant protection formulation comprising at least one Cu²⁺ compound as an active ingredient as described in the first claim.

Protecting crops from pathogens is of utmost economical importance. To protect crops against certain unwanted attacks by pathogens, topical application of copper (Cu²⁺) salts has been widely used for a long time (Lodeman E.G., The spraying of plants, Mac Millan NY 1902). The use of Cu²⁺ compounds to protect plants is based upon observation that lower organisms are much more sensitive to the toxic effect of Cu²⁺ compounds than higher organisms, such as cultivated plants. The toxicity of free Cu²⁺ ions to lower organisms is attributed to the high affinity of Cu²⁺ ions for N based compounds, in particular compounds containing amino groups, such as for example proteins (Tomono K., et al J. Pestic. Sci. 7, 1982, pp 329 and by Graham R.D. in "Micronutrients in Agriculture" Sec. Ed. 1991). The ability of Cu²⁺ ions to denaturate such proteins is believed to be the key factor in its toxicity to micro-organisms.

Commonly used crop protection formulations comprise suspensions of substantially insoluble Cu²⁺-salts. The Cu²⁺ salts are usually rendered insoluble in the aqueous formulation by increasing the pH through addition of a base, for example calcium carbonate, calcium hydroxide etc., or by selecting as the active Cu²⁺ compound a salt with a low water solubility, for example copper oxychloride. The suspensions are mostly applied as foliar suspension (Index Phytosanitair Acta 2002, 38^{th} ed., The Pesticide Manual, 11^{th} ed., 1997). Neutralized suspensions of Cu²⁺ salts are preferred over straight aqueous solutions of water-soluble Cu²⁺ salts, because of the aggressiveness of the water-soluble salts to the plants, causing damage to the leaves if not neutralised.

Besides this adverse effect, the currently used Cu²⁺-based formulations have been found to show contradictory effects in many aspects. If minimised leaf damage of a foliar applied formulation is aimed at and use is made of a poorly soluble Cu²⁺ salt, the known formulations must contain huge amounts of this salt to achieve an effective protection of the plants. Often, total amounts of Cu²⁺ exceeding 200 times the nutritional need (i.e. 100g Cu²⁺ per hectare) (A. Loué, Les Oligo-Eléments en Agriculture, Agri-Nathan Int. Paris, 1986, W. Bergmann, Ernährungsstörungen bei Kulturpflanzen, G. Fisher Verlag, 1988) are applied. This approach creates a serious burden to the environment and to the fertility of the soil. Several cases have been reported where the use of such huge amounts of Cu²⁺ salts for crop protection purposes involved a serious contamination of the upper soil layers and rendered the field unsuitable for growing other crops than deep rooted ones such as vine and fruit trees. However, application of Cu²⁺-salts, either alone or in combination with other pesticides, is still considered indispensable if it is desired to control specific diseases occurring with plants.

DE-A-3632116 discloses copper (II) complexes with polyamines such as polyethyleneimines, which are useful as fungicides in plant protection. The polyamines have a molecular weight of 3000-5000000.

GB-A-1491137 discloses copper complexes with polyamines including simple polyamines as algaecides or aquatic herbicides.

FR-A-1301904 discloses fungicidal products for use on plants, which contain copper and other metal complexes with polyamines of the formula R.NH.(CH₂)₃.NH.(CH₂)₃.NH.R', wherein R is a hydrocarbon group having 6 to 22 carbon atoms, and R' is hydrogen or (CH₂)₃.NH₂.

FR-A-1130117 discloses fungicides for use in plant protection which comprise metal complexes, including copper complexes with polyamines. The complexes are "surcomplexes" containing more than one chelate.

US-A-4048324 discloses copper - polyamine complexes useful as fungicides. The amine compounds have at least two "rather heavy groups" attached to nitrogen,of which at least one is alkyl or alkenyl of at least 4 carbon atoms.

US-A-2977279 discloses fungicidal copper complexes with N-alkenyl-alkylene polyamines.

US-A-2924551 discloses fungicidal complexes of metals such as copper with diamines, wherein the diamines have at least one secondary amine.

JP-A-58162508 discloses complexes of metals such as copper with polyamines such as ethylenediamine etc., for use as herbicides.

In respect of environmental and economical considerations, there is thus a need for a plant protection formulation with which the total amount of Cu²⁺ compounds needed for protecting crops against pathogens may be reduced, without this going at the expense of the effectiveness of the formulation.

It is therefore an object of this invention to provide a plant protection formulation with which the total amount of Cu²⁺ compounds used may be reduced, without this going at the expense of the protective efficacy of the formulation.

This is achieved with the present invention with the technical features of the first claim.

The plant protection formulation of this invention contains an amount of at least one positively charged chelate of Cu²⁺ with a polyamine compound as the active ingredient.

If it is desired to increase the effectiveness of the formulation with respect to specific pathogens, or depending on the nature of the plant, the formulation may contain two or more chelates of Cu²⁺ with two or more different polyamine compounds.

The active ingredient of this invention comprises an amount
of one or more polyamines corresponding to formula (I):

NH₂(CH₂)ₘ[(NH)(CH₂)ₖ]ₙNH₂ (formula I)

in which
- n may take any value between 0 - 50
- m and k may take independently of each other any value between 1 and 5.

Preferably however m and k are independently of each other 2 or 3 as these correspond to respectively ethylene and propylene amines and mixed ethylene-propyleneamines. This type of polyamines has been found to form 5- or 6-membered chelate rings are the most easily formed and are the most stable.

Optionally, the plant protection formulation of this invention contains an amount of a polyethyleneimine (PEI), the polyethyleneimine corresponding to formula (II) 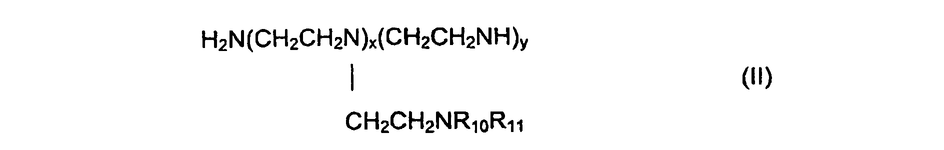 or a derivative or salt of such a compound, in which R¹⁰ and R¹¹ may be each independently of each other: H, a straight chain or branched alkyl residue or an aryl residue, in which the alkyl or aryl residue may contain one or more functional groups, selected from a hydroxyl group, an alkoxy or aryloxy residue, an alkylamino or arylamino residue, an amino residue, a phosphor-containing group or a sulfur-containing group, and in which one or more of the N-atoms may, independently of each other, be quaternized by an additional substituent, the substituents including an alkyl, aryl or alkylamino group.

Preferably, the polyethyleneimine of formula II comprises approximately 25-30% primary amine groups, 40-50% secondary amine groups and 25-30% tertiary amine groups.

Preferred polyethyleneimines have a molecular weight ranging between 300 to 70000.

Preferred polyamines are selected from the group of naturally occurring compounds comprising among others for example spermine (NH₂-(CH₂)₃-NH-(CH₂)₄-NH-(CH₂)₃NH₂), canavalmine (NH₂-(CH₂)₄-NH-(CH₂)₃NH-(CH₂)₄-NH₂) and thermohexamine (NH₂-(CH₂)₃-NH-(CH₂)₃-NH-(CH₂)₃-NH-(CH₂)₄-NH-(CH₂)₃-NH₂) or a mixture of two or more of these compounds. However, synthetic polyamines may also be used.

The Cu²⁺-chelates of this invention have been found to show an improved effectiveness against pathogens as compared to the known formulations. The inventor has attributed this to the improved adsorption and/or adherence of the formulation of the present invention to the leaves and fruit of the plant. Because of the improved effectiveness the formulation dosage, and the amount of Cu²⁺ needed to achieve the desired crop protection level, may be reduced with a factor of 5-25 with respect to the known compositions.

An analysis of problems occurring with the known formulations has revealed that the majority of the external parts of the plants, such as leaves and fruit, are negatively charged. As the active ingredient of this invention carries a positive charge, a stronger interaction based on ionic interaction between the active ingredient and the negatively charged plant parts, in particular the aerial parts of the plant, may be achieved. It has namely been found that, once absorbed, the Cu²⁺-chelates strongly adhere to the leaves and can hardly be removed there from with water. If it is desired to desorb the Cu²⁺ chelate ions, application of another cation-containing formulation is necessary. This in contrast to the commonly used chelated micronutrients in agriculture having chelating agents such as EDTA, DTPA, HEDTA, EDDHA or EDDHMA, which are neutral or negatively charged. Because of their negative or neutral charge, these compounds are not directly adsorbed to the aerial parts of the plants.

Following adsorption of the positively charged Cu²⁺-chelate on the leaves and other external parts of the plants, a water-resistant film is created, which is strongly bound to the leaves and fruit. The strongly bound film protects the plants and fruit against possible attacks by pathogens. Pathogens contacting this protective layer will absorb an amount of the Cu²⁺-chelate directly or indirectly. In the latter case absorption of Cu²⁺ involves an exchange of N containing compounds of the pathogen for the Cu²⁺-chelate cations. Due to the presence of the Cu²⁺-chelate in the pathogen, its vital proteins get denaturated, this effect being fatal to the pathogen.

The polyamine active ingredient of formula (I) and polyethyleneimines (PEI) active ingredient of formula (II) of this invention have the advantage that the N atoms contain free electron pairs, which are available for interaction with the 3d orbitals of the positively charged Cu²⁺ ions. Chelating agents of this type form chelates having the same charge as the metal atom with which they form the chelate. A strong chelate is formed in which the Cu²⁺ ion is entrapped in a cyclic entity of a hetero-cyclic ring (Dwyer F.P. and Mellor D.P. Chelating Agents and Metal Chelates-Academic Press New York 1964). A strong chemical bond exists between the 3d orbitals of the Cu²⁺ ions and the free electrons of the chelating agent. This strong chemical bond involves that release of free copper may be minimised as a result of which the toxicity of the plant protection formulation of this invention to the plants and the damage inferred to the leaves and fruit, when applied topical or in a foliar way, may be minimised.

The inventor has also found that penetration of the active ingredient of this invention into the internal metabolic part of the plant, and accordingly the influence of the Cu²⁺ cations on the plant metabolism may be minimised. It is believed that two factors contribute thereto: on the one hand the strong interactions existing between the leaves and the active ingredient, on the other hand limited penetration into the metabolic part of the plant due to the charge and shape of the chelate.

The above described plant protection formulation is applied to the plants, preferably to the aerial parts of the plants. In particular the plant protection formulation is applied to the leaves and fruit, but may also be applied to the branches of a plant. However, foliar application and application to the external part of the fruit is preferred as these parts have been found to possess a high cation exchange capacity. The ion exchange capacity of the leaves appeared to be of approximately the same order of magnitude as the cation exchange capacity of the roots (Fregoni M. Some aspects of epigean nutrition of grapevines. In "Foliar Fertilizers" Ed. Alexander A. Martinus Nijhof Pub. 1986). The plant leaves as such form a suitable aerial part of the plant for adsorbing a significant amount of cations on the leave surface.

The Cu²⁺-chelates of this invention, in particular the Cu²⁺ chelates of **formula I,** show good stability at pH values between 3 and 12. In that way the Cu²⁺ ions get protected against secondary reactions with phosphates, carbonates and hydroxides. This is important as the latter are frequently applied to the fields as a.o. fertilizers to the soil or in foliar application.

The plant protection formulation of this invention may contain a mixture of one or more polyamines of formula I, and/or one or more polyethyleneimines of formula II.

Depending on the nature of the polyamine or polyethyleneimine used in the formulation of this invention, i.e. the number of amine groups present in the molecule, the molar ratio of the chelating agent with respect to Cu²⁺ may vary. Cu²⁺ ions have a coordination of 4 and 6 depending on the nature of the chelating agent. Therefore preferably, the molar ratio of Cu²⁺ with respect to the chelating agent varies from approximately 450:1 to 2:1 when a polyethyleneimine compound is used as the chelating agent, and from approximately 1:3 to 6:1, preferably from 1:3 to 3:1, more preferably from 1:3 to 1:1, when a polyamine compound is used as the chelating agent. For example, when EDA or DETA is used as the chelating agent, the molar ratio EDA:Cu²⁺ or DETA:Cu²⁺ to obtain the Cu²⁺-chelate can be 1:1 or 2:1.

Examples of preferred polyamines for use with the present invention include ethylene polyamines, propylene polyamines, or mixed ethylene-propylene polyamines. Examples of preferred polyamines include ethylenediamine (EDA) (NH₂(CH₂)₂NH₂), diethylenetriamine (DETA) (NH₂(CH₂)₂NH(CH₂)₂NH₂), triethylenetetramine (TETA) (NH₂(CH₂)₂NH(CH₂)₂NH(CH₂)₂NH₂), tetraethylenepentamine (TEPA) (NH₂(CH₂)₂NH(CH₂)₂NH(CH₂)₂NH(CH₂)₂NH₂), pentaethylenehexamine (PEHA) (NH₂(CH₂)₂NH(CH₂)₂NH(CH₂)₂NH(CH₂)₂NH(CH₂)₂NH₂), hexaethyleneheptamine (HEPA), propylenediamine, dipropylenetriamine, tripropylenetetramine, tetrapropylenepentamine, pentapropylenehexamine, ethylenepropylenetriamine, diethylenepropylenetetramine, ethylenedipropylenetetramine, ethylenepropylenepolyamines, β,β',β",β'''-Triaminotriethylethylamine (N⁺(CH₂-CH₂-NH₂)₄), N⁴-Bis(aminopropyl)-norspermidine (N⁺(CH₂-CH₂-CH₂-NH₂)₄) and N⁴-Bis(aminopropyl)-spermidine (NH₂-CH₂-CH₂-CH₂-CH₂-N⁺(CH₂-CH₂-CH₂NH₂)₃), and/or the phosphate, sulfate or HCl salt of such a polyamine and mixtures of two or more of the aforementioned compounds. Some of these compounds are readily commercially available.

The plant protection formulation may further contain one or more fertilizers, preferably one or more major and/or secondary and/or chelated and/or non chelated micronutrient fertilizing elements.

Also, the plant protection formulation may contain an amount of one or more pesticides.

The plant protection formulation of the present invention may further contain the usual adjuvants and formulation aids such as emulsifiers, wetting agents, sticking agents and detergents.

The formulation of the present invention may further comprise or be formulated together with other usual pesticides, if it is desired to better control specific plant diseases. The preferred pesticides include those, which show a synergetic effect with the active ingredient of this invention.

The active ingredient of this invention may be present in different forms, it may either be dissolved or suspended in the plant protection formulation, be used as a solid, be adsorbed onto a carrier, encapsulated or micoencapsulated, granulated or microgranulated, tabletted.

The present invention also relates to a method for preparing the above described formulation, according to which a Cu²⁺ compound, preferably a Cu²⁺ salt, is caused to react with an aqueous solution of at least one polyamine compound corresponding to the formula (I) and/or with an aqueous solution of at least one polyethyleneimine according to formula II 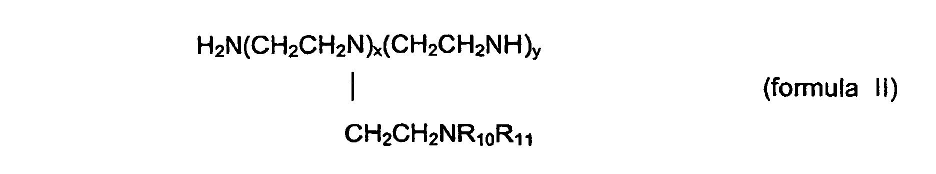 or a derivative or salt of such a compound, in which R¹⁰, R¹¹ may each independently of each other be H, a straight chain or branched alkyl residue or an aryl residue, in which the alkyl or aryl residue may contain one or more functional groups, selected from a hydroxyl group, an alkoxy or aryloxy residue, an alkylamino or arylamino residue, an amino residue, a phosphor-containing group or a sulfur-containing group, and in which in which one or more of the N-atoms may, independently of each other, be quaternized by an additional substituent, the substituents including an alkyl, aryl or alkylamino group.

The copper salt may either be added as a solution or in the solid state.

As a Cu²⁺ compound preferably use is made of a Cu²⁺ salt selected from the group of Cu²⁺ sulfate, nitrate, phosphate, chloride, oxide, hydroxide, hydrated oxide, hydroxide or organic Cu²⁺ salts. However, other suitable salts known to the man skilled in the art may also be used.

To improve the yield and reaction rate, an amount of an inorganic and/or organic acid may be added to the reaction mixture. The inorganic and/or organic acid may be added at any stage as reaction aid.

The present invention also relates to a method of protecting crops according to which the above described formulation is applied to the leaves and/or fruits of the plant.

In practise, the plant protection formulation of this invention will usually contain 50-150g Cu²⁺ per liter, preferably 60-120g Cu²⁺ per liter, and is usually applied at 0.5-2 I/ha crops, preferably at 1-1.5l/ha. Mostly, between 80-150g of Cu²⁺ per ha and per application are applied. To guarantee a uniform spreading, the formulation is used as dosages of 400-1000 I per ha. In contrast, in the known art for example bordeaux mixtures or copperoxychloride usually contained 1500 - 4300g Cu²⁺ per ha and per application (Index Phytosanitaire Acta 2002 Association de Coordination Technique Agricole Paris 2002). In other examples in Italy, three applications of Cu²⁺ compounds were needed, which resulted in the application of 7270 g, 6000 g or 3600 g Cu²⁺ per ha (respectively neutralized coppersulfate, copperoxychloride and copperhydroxide) (Terra e Vite 38- 2000). In sensitive areas growers may even go up to eleven applications. With the plant protection formulation of the present invention, 8-16 times less Cu²⁺ can be applied, and this without affecting the protective efficacy of the formulation.

Table 1 gives the stability constant (log K) of some Cu²⁺-chelates having a polyaminocarboxylic (EDTA, DTPA, HEDTA), or a polyamine (EDA, DETA, TETA, TEPA), as the chelating agent.

| **Log k for some Cu**^{**2+**}**-chelates** | | | | | | | |
|---|---|---|---|---|---|---|---|
| | EDTA | DTPA | HEDTA | EDA | DETA | TETA | TEPA |
| CuL (k1) | 18.8 | 21.6 | 18.8 | 10.7 | 16.0 | 20.5 | 22.8 |
| CuL2(k1k2) | | | | 20.1 | 21.3 | | |

The invention is further elucidated in the attached examples.

### Example 1.

Grape vine plots were sprayed with 1.5 lof a solution of Cu²⁺ tetraethylenepentamine (Cu-TEPA) containing 80 g Cu²⁺/l. The thus treated grape vines were compared with non treated grape vines and vines treated with the usual combinatory formulations of Cu²⁺ salts and specific pesticides. The grape vines were evaluated for the occurrence of *Plasmopara viticola, Uncinula necator, Guignardia bidwellii, Botrytis cinerea*.

The results, in % of affected grapes two weeks before harvest, are given in table 1. All the treatments were as always stopped 2 weeks before harvest in order to avoid residues. As can be seen from this table, infection of grape vines by the usual pathogens may be reduced, to comparable levels of the traditional treatments, by foliar application of the formulation of this invention.

**Table 1:**

| **% of affected grape vines 2 weeks before harvest** | | | | |
|---|---|---|---|---|
| | *Plasmopara viticola* | *Uncinula necator* | *Guignardia bidwellii* | *Botrytis cinerea* |
| Non treated | 51.73 | 7.16 | 8.32 | 7.45 |
| Treated with Cu-TEPA | 1.97 | 0.96 | 1.57 | 0.87 |
| Conventional treatment | 0.52 | 0.39 | 1.93 | 1.42 |

## Claims

1. Use of a composition for the protection of crops comprising an active ingredient in the form of a positively charged amine-Cu²⁺ metal complex, **characterised in that** the active ingredient comprises an amount of one or more polyamines corresponding to formula (I):
NH₂(CH₂)ₘ[(NH)(CH₂)ₖ]ₙNH₂ (formula I)
in which
- n may take any value between 0 - 50
- m and k may take independently of each other any value between 1 and 5.

2. Use according to claim 1, **characterized in that**, in formula (I) m and k may take independently of each other the value 2 or 3.

3. Use according to claim 1 or 2, **characterized in that**, in formula (I) n has a value different from 0.

4. Use according to any one of claims 1-3, **characterised in that** the molar ratio of Cu²⁺ with respect to the polyamine chelating agent varies from approximately 1:3 to 6:1, preferably from 1:3 to 3:1, more preferably from 1:3 to 1:1.

5. Use according to any one of claims 1-4 , **characterised in that** the polyamine is selected from the group of naturally occurring compounds comprising spermine, canavalmine and thermohexamine or a mixture of two or more of these compounds.

6. Use according to any one of claims 1-5 **characterized in that** the active ingredient comprises in addition an amount of a polyethyleneimine (PEI), the polyethyleneimine corresponding to formula (II) 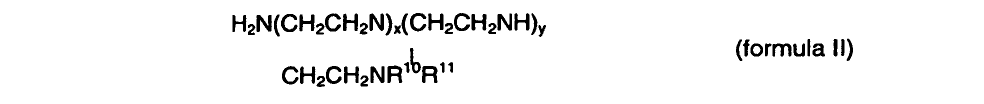 or a derivative or salt of such compound, in which R¹⁰ and R¹¹ may be each independently of each other: H, a straight chain or branched alkyl residue or an aryl residue, in which the alkyl or aryl residue may contain one or more functional groups, selected from a hydroxyl group, an alkoxy or aryloxy residue, an alkylamino or arylamino residue, an amino residue, a phosphor-containing group or a sulfur-containing group, and in which one or more of the N-atoms may, independently of each other, be quaternized by an additional substituent, the substituents including an alkyl, aryl or alkylamino group.

7. Use according to claim 6, **characterised in that** the polyethyleneimine comprises approximately 25-30% primary amine groups, 40-50% secondary amine groups and 25-30% tertiary amine groups.

8. Use according to claim 6 or 7, **characterised in that** the polyethyleneimine has a molecular weight ranging from 300 to 70000.

9. Use according to any one of claims 6-8, **characterised in that** the molar ratio of Cu²⁺ with respect to the polyethyleneimine chelating agent varies from approximately 450:1 to 2:1.

10. Use according to any one of claims 1-9, **characterised in that** the composition contains an amount of one or more fertilizers, preferably one or more major and/or secondary and/or chelated and/or non chelated micronutrient fertilizing elements, one or more pesticides, one or more of the usual adjuvants and formulation aids or a mixture of two or more of these compounds.

11. Use according to any one of claims 1-10, **characterised in that** the active ingredient is dissolved or suspended in the plant protection formulation or **in that** the active ingredient is present as a solid, adsorbed onto a carrier, encapsulated or micoencapsulated, granulated or microgranulated, tabletted.

12. Use according to any one of claims 1-11, **characterised in that** an amount of the composition according to any one of claims 1-11 is applied to the leaves and/or aerial parts and/or fruits of a plant.

13. Use according to any one of claims 1-12, **characterised in that** from 80 to 150 g of Cu²⁺ per ha and per application is applied.

14. Use according to any one of claims 1-13, for protecting grape vines against one or more pathogens selected from the group comprising Plasmopara viticola, Uncinula necator, Guignardia bidwellii, Botrytis cinerea, wherein the plant protection composition is applied to the grape vines and wherein the polyamine is tetraethylenepentamine.

## Patentansprüche

1. Verwendung einer Zusammensetzung zum Schutz von Feldfrüchten, umfassend einen aktiven Bestandteil in Form eines positiv geladenen Amin-Cu²⁺-Metallkomplexes, **dadurch gekennzeichnet, dass** der aktive Bestandteil eine Menge von einem oder mehreren Polyaminen entsprechend Formel (I) umfasst:
NH₂(CH₂)ₘ[(NH)(CH₂)ₖ]ₙNH₂ (Formel I)
worin
- n jeden beliebigen Wert zwischen 0 und 50 annehmen kann,
- m und k unabhängig voneinander jeden anderen beliebigen Wert zwischen 1 und 5 annehmen können.

2. Verwendung nach Anspruch 1, **dadurch gekennzeichnet, dass** m und k in Formel (I) unabhängig voneinander den Wert 2 oder 3 annehmen können.

3. Verwendung nach Anspruch 1 oder 2, **dadurch gekennzeichnet, dass** n in Formel (I) einen Wert hat, der sich von 0 unterscheidet.

4. Verwendung nach einem der Ansprüche 1 bis 3, **dadurch gekennzeichnet, dass** das Molverhältnis von Cu²⁺ in Bezug auf den Polyamin-Chelatbildner von ungefähr 1:3 bis 6:1, vorzugsweise 1:3 bis 3:1, insbesondere 1:3 bis 1:1 variiert.

5. Verwendung nach einem der Ansprüche 1 bis 4, **dadurch gekennzeichnet, dass** das Polyamin ausgewählt ist aus der Gruppe von natürlich vorkommenden Verbindungen, die Spermin, Canavalmin und Thermohexamin oder eine Mischung von zwei oder mehreren dieser Verbindungen umfasst.

6. Verwendung nach einem der Ansprüche 1 bis 5, **dadurch gekennzeichnet, dass** der aktive Bestandteil zusätzlich eine Menge eines Polyethylenimins (PEI), wobei das Polyethylenimin Formel (II) entspricht:
H₂N(CH₂CH₂N)ₓ(CH₂CH₂NH)_{y}CH₂CH₂NR¹⁰R¹¹ (Formel II),
oder eines Derivats oder Salzes einer solchen Verbindung umfasst, wobei R¹⁰ und R¹¹ jeweils unabhängig voneinander H, ein geradkettiger oder verzweigter Alkylrest oder ein Arylrest sein können, wobei der Alkyl- oder Arylrest eine oder mehrere funktionale Gruppen ausgewählt aus einer Hydroxylgruppe, einem Alkoxy- oder Aryloxyrest, einem Alkylamino- oder Arylaminorest, einem Aminorest, einer phosphorhaltigen Gruppe oder einer schwefelhaltigen Gruppe enthalten kann, und wobei ein oder mehrere der N-Atome unabhängig voneinander durch einen zusätzlichen Substituenten quaternisiert sein kann bzw. können, wobei die Substituenten eine Alkyl-, Aryl- oder Alkylaminogruppe einschließen.

7. Verwendung nach Anspruch 6, **dadurch gekennzeichnet, dass** das Polyethylenimin ungefähr 25 bis 30 % primäre Amingruppen, 40 bis 50 % sekundäre Amingruppen und 25 bis 30 % tertiäre Amingruppen umfasst.

8. Verwendung nach Anspruch 6 oder 7, **dadurch gekennzeichnet, dass** das Polyethylenimin ein Molekulargewicht im Bereich von 300 bis 70000 hat.

9. Verwendung nach einem der Ansprüche 6 bis 8, **dadurch gekennzeichnet, dass** das Molverhältnis von Cu²⁺ in Bezug auf den Polyethylenimin-Chelatbildner von ungefähr 450:1 bis 2:1 variiert.

10. Verwendung nach einem der Ansprüche 1 bis 9, **dadurch gekennzeichnet, dass** die Zusammensetzung eine Menge von einem oder mehreren Düngemitteln, vorzugsweise einem oder mehreren Haupt- und/oder Neben- und/oder chelierten und/oder nichtchelierten Spurenelement-Düngebestandteilen, einem oder mehreren Pestiziden, einem oder mehreren der üblichen Hilfsstoffe und Formulierungshilfsmittel oder einer Mischung von zwei oder mehreren dieser Verbindungen enthält.

11. Verwendung nach einem der Ansprüche 1 bis 10, **dadurch gekennzeichnet, dass** der aktive Bestandteil in der Pflanzenschutzformulierung gelöst oder suspendiert ist, oder dass der aktive Bestandteil als Feststoff, auf einem Träger adsorbiert, verkapselt oder mikroverkapselt, granuliert oder mikrogranuliert, tablettiert vorliegt.

12. Verwendung nach einem der Ansprüche 1 bis 11, **dadurch gekennzeichnet**, das eine Menge der Zusammensetzung nach einem der Ansprüche 1 bis 11 auf die Blätter und/oder in der Luft befindlichen Teile und/oder Früchte einer Pflanze aufgebracht wird.

13. Verwendung nach einem der Ansprüche 1 bis 12, **dadurch gekennzeichnet, dass** 80 bis 150 g Cu²⁺ pro Hektar und pro Auftragung aufgebracht werden.

14. Verwendung nach einem der Ansprüche 1 bis 13 zum Schutz von Weintrauben gegen ein oder mehrere Pathogene ausgewählt aus der Gruppe umfassend Plasmopara viticola, Uncinula necator, Guignardia bidwellii, Botrytis cinerea, wobei die Pflanzenschutzzusammensetzung auf die Weintrauben aufgebracht wird und wobei das Polyamin Tetraethylenpentamin ist.

## Revendications

1. Utilisation d'une composition pour la protection des cultures comprenant un ingrédient actif sous la forme d'un complexe métallique Cu²⁺ - amine à charge positive, **caractérisée en ce que** l'ingrédient actif comprend une quantité d'une ou plusieurs polyamines correspondant à la formule (I) :
NH₂(CH₂)ₘ[(NH)(CH₂)ₖ]ₙNH₂ (formule I)
dans laquelle
- n peut prendre une valeur quelconque entre 0 - 50
- m et k peuvent prendre, indépendamment l'un de l'autre, une valeur quelconque entre 1 et 5.

2. Utilisation selon la revendication 1, **caractérisée en ce que** dans la formule (I), m et k peuvent prendre, indépendamment l'un de l'autre; la valeur 2 ou 3.

3. Utilisation selon la revendication 1 ou 2, **caractérisée en ce que** dans la formule (I), n a une valeur différente de 0.

4. Utilisation selon une quelconque des revendications 1 - 3, **caractérisée en ce que** le rapport molaire de Cu²⁺ vis à vis de l'agent chélatant la polyamine varie d'approximativement 1 : 3 à 6 : 1, de manière préférentielle de 1 : 3 à 3 : 1, de manière plus préférentielle de 1 : 3 à 1 : 1.

5. Utilisation selon une quelconque des revendications 1 - 4, **caractérisée en ce que** la polyamine est sélectionnée dans le groupe de composés d'origine naturelle comprenant la spermine, la canavalmine et la thermohexamine ou un mélange de deux ou plus de deux de ces composés.

6. Utilisation selon une quelconque des revendications 1 - 5, **caractérisée en ce que** l'ingrédient actif comprend en outre une quantité d'une polyéthylèneimine (PEI), la polyéthylèneimine correspondant à la formule (II) 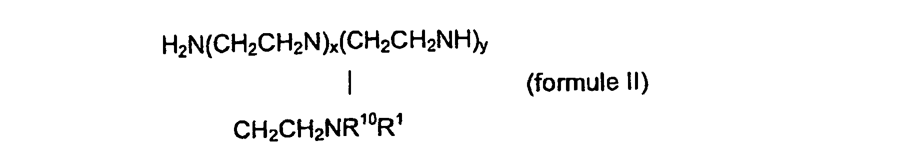 ou un dérivé ou un sel de ce composé, dans lequel R¹⁰ et R¹¹ peuvent être chacun indépendamment l'un de l'autre : H, un reste alkyle à chaîne linéaire ou ramifiée ou un reste aryle, dans lequel le reste alkyle ou aryle peut contenir un ou plusieurs groupes fonctionnels sélectionnés parmi un groupe hydroxyle, un reste alcoxy ou aryloxy, un reste arylamino, un reste amino, un groupe contenant du phosphore ou un groupe contenant du soufre, et dans lequel un ou plusieurs atomes de N peuvent, indépendamment l'un de l'autre, être quaternisés par un substituant additionnel, les substituants comprenant un groupe alkyle, aryle ou alkylamino.

7. Utilisation selon la revendication 6, **caractérisée en ce que** la polyéthylèneimine comprend approximativement 25 - 30 % de groupes amine primaire, 40 - 50 % de groupes amine secondaire et 25 - 30 % de groupes amine tertiaire.

8. Utilisation selon la revendication 6 ou 7, **caractérisée en ce que** la polyéthylèneimine a un poids moléculaire allant de 300 à 70000.

9. Utilisation selon une quelconque des revendications 6 - 8, **caractérisée en ce que** le rapport molaire de Cu⁺² vis à vis de l'agent chélatant la polyéthylèneimine varie d'approximativement 450 : 1 à 2 : 1.

10. Utilisation selon une quelconque des revendications 1 - 9, **caractérisée en ce que** la composition contient une quantité d'un
ou plusieurs fertilisants, de préférence un ou plusieurs éléments fertilisants à base de micronutriments principaux et / ou secondaires et / ou chélatés et / ou non chélatés, un ou plusieurs pesticides, un ou plusieurs des adjuvants habituels et des auxiliaires de formulation ou un mélange de deux ou plus de deux de ces composés.

11. Utilisation selon une quelconque des revendications 1 - 10, **caractérisée en ce que** l'ingrédient actif est dissous ou mis en suspension dans la formulation du produit phytosanitaire ou **en ce que** l'ingrédient actif est présent sous forme solide, adsorbé sur un porteur, encapsulé ou microencapsulé, granulé ou microgranulé, pastillé.

12. Utilisation selon une quelconque des revendications 1 - 11, **caractérisée en ce qu'**une quantité de la composition selon une quelconque des revendications 1 - 11 est appliquée sur les feuilles et / ou sur les parties aériennes et / ou les fruits d'une plante.

13. Utilisation selon une quelconque des revendications 1 - 12, **caractérisée en ce qu'**on applique de 80 à 150 g de Cu²⁺ par ha et par application.

14. Utilisation selon une quelconque des revendications 1 - 13 pour protéger des vignes contre un ou plusieurs agents pathogènes sélectionnés dans le groupe comprenant le Plasmopara viticola, l'Uncinula necator, le Guignardia bidwellii, le Botrytis cinerea, dans laquelle la composition phytosanitaire est appliquée sur les vignes et dans laquelle la polyamine est de la tétraéthylènepentamine.
